# EUROPEAN PATENT SPECIFICATION

(11) **EP 2 918 921 B1**
(45) Date of publication and mention of the grant of the patent: **28.02.2018**
(21) Application number: 15158678.1
(22) Date of filing: 11.03.2015
(51) Int. Cl.: F24D 3/18, F25B 6/04, F24D 19/00, F25B 47/02, F24D 19/10, F25B 25/00, F25B 49/02

(54) **HOT WATER GENERATOR**
HEISSWASSERERZEUGER
GÉNÉRATEUR D'EAU CHAUDE

(30) Priority: 12.03.2014 JP 2014048457; 12.03.2014 JP 2014048461
(43) Date of publication of application: 16.09.2015
(73) Proprietor: Panasonic Intellectual Property Management Co., Ltd., Osaka-shi, Osaka 540-6207 (JP)
(72) Inventor: Moriwaki, Shunji, Osaka, 540-6207 (JP); Aoyama, Shigeo, Osaka, 540-6207 (JP); Yamamoto, Teruo, Osaka, 540-6207 (JP); Shigeta, Akihiro, Osaka, 540-6207 (JP)
(74) Representative: Eisenführ Speiser

(56) References cited:
- EP-A1- 1 533 154
- EP-A1- 2 420 746
- EP-A2- 2 410 249
- EP-A2- 2 482 014
- WO-A1-2006/114983
- JP-A- 2011 021 882
- US-A- 4 796 437
- US-A- 5 269 153

## Description

### [TECHNICAL FIELD]

The present invention relates to a hot water generator utilizing a refrigeration cycle, and more specifically, to a device configuration suitable for a defrosting operation of an evaporator and to a control method thereof.

### [BACKGROUND TECHNIQUE]

In a conventional hot water generator, a compressor, refrigerant-liquid heat exchanger (radiator), an expansion valve and a refrigerant-air heat exchanger (evaporator) are connected to one another through pipes, and heat of refrigerant circulating through the pipes is radiated, by a radiator, to liquid which is utilizing-side heat medium, and the heat is utilized for heating a room or supplying hot water.

Here, most of heat source for the heating utilizing-side heat medium is endotherm (heat absorption) from air in the evaporator. When heat is absorbed, low temperature refrigerant passes through a pipe of the evaporator to exchange heat with outside air. Therefore, moisture in air is condensed on a surface of the evaporator and frost is formed. If frost is formed on the evaporator, heat transfer efficiency is deteriorated, and a heat absorption amount is reduced. To prevent operation efficiency of a device caused by reduction in the heat absorption amount, defrosting operation is carried out (see patent document 1 for example).

Fig. 9 shows a conventional hot water generator described in patent document 1.

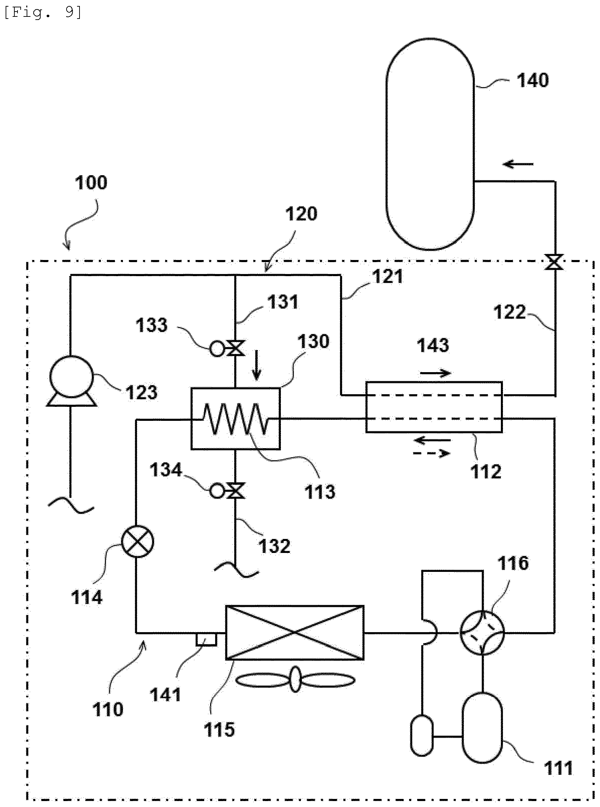

As shown in Fig. 9, the hot water generator 100 includes a refrigerant circuit 110 through which refrigerant circulates, and a water circuit 120 through which water flows.

The refrigerant circuit 110 is formed by annularly connecting, to one another through pipes, a compressor 111, a radiator 112 which exchanges heat between refrigerant and water, a heat accumulating heat transfer pipe 113, an expansion valve 114 and an evaporator 115 which exchanges heat between refrigerant and air. The refrigerant circuit 110 is provided with a four-way valve 116 for switching between a heating operation and a defrosting operation.

The water circuit 120 includes a water inlet pipe 121 which brings a water source (e.g., public water pipe) (not shown) and the radiator 112 into communication with each other, and a water outlet pipe 122 brings the radiator 112 and the hot water tank 140 into communication with each other.

A water supply pump 123 is placed in the water inlet pipe 121. The water inlet pipe 121 branches off between the water supply pump 123 and the radiator 112, and a heat accumulating water tank water supply pipe 131 which is in communication with a heat accumulating water tank 130 is connected to the water inlet pipe 121.

The heat accumulating water tank 130 accommodates the heat accumulating heat transfer pipe 113 therein. A heat accumulating water tank water supply pipe 131 for receiving water and a heat accumulating water tank water discharge pipe 132 for discharging water are connected to the heat accumulating water tank 130. A heat accumulating water tank water supply on-off valve 133 is placed in the heat accumulating water tank water supply pipe 131. A heat accumulating water tank water discharge on-off valve 134 is placed in the heat accumulating water tank water discharge pipe 132.

When water is stored in the heat accumulating water tank 130, the heat accumulating water tank water supply on-off valve 133 is opened or closes, and water of the water source is stored in the heat accumulating water tank 130. When water stored in the heat accumulating water tank 130 is discharged, the heat accumulating water tank water discharge on-off valve 134 is opened.

When a hot water supplying and heating operation is carried out, refrigerant discharged from the compressor 111 enters a water heat exchanger 112 through the four-way valve 116, heat is radiated to water (water is heated) and then, the refrigerant becomes high temperature liquid refrigerant and flows into the heat accumulating heat transfer pipe 113. Refrigerant which flows into the heat accumulating heat transfer pipe 113 radiates heat and becomes low temperature liquid refrigerant while temperature of water in the heat accumulating water tank 130 rises to a value close to refrigerant temperature, the liquid refrigerant is decompressed by the expansion valve 114 and then, the refrigerant absorbs heat (cools air) from air in the evaporator 115, and returns into the compressor 111 through the four-way valve 116.

In the water circuit 120, water is sent out by the water supply pump 123, and flows into the radiator 112 through the water inlet pipe 121. The water receives heat from the refrigerant and is heated, and the water is sent to the hot water tank 140 through the water outlet pipe 122 as hot water.

When the defrosting operation is carried out, the four-way valve 116 is switched, and a reverse cycle defrosting operation is executed. In the reverse cycle defrosting operation, high temperature gas refrigerant compressed in the compressor 111 flows directly to the evaporator 115.

That is, high temperature refrigerant which comes out from the compressor 111 passes through the four-way valve 116 and enters the evaporator 115. The refrigerant radiates heat in the evaporator 115 to defrost and then, the refrigerant becomes low pressure refrigerant and flows into the expansion valve 114 . The refrigerant which passes through the expansion valve 114 flows into the heat accumulating heat transfer pipe 113, and absorbs heat from hot water in the heat accumulating water tank 130. The refrigerant passes through the radiator 112 and returns to the compressor 111 through the four-way valve 116.

Patent Document 2 forming the closest prior art from which the present inventions starts, discloses an air conditioning system for cooling or heating an air, and for feeding the heated or cooled air to predetermined portions. This known air conditioning system comprises a first circulating circuit for circulating a first heating medium, a second circulating circuit for circulating a second heating medium, a control unit for controlling the heat for executing heat exchange between the first heating medium and the second heating medium to flow through either a heat exchanger or a first heat storage device. Moreover, an air temperature is controlled by heat of the second heating medium.

### [PRIOR ART DOCUMENT]

### [PATENT DOCUMENT]

[Patent Document 1] Japanese Patent Publication No.5264973
[Patent Document 2] EP Patent Application 1 533 154

### [SUMMARY OF THE INVENTION]

### [PROBLEM TO BE SOLVED BY THE INVENTION]

However, in the conventional hot water generator, if the reverse cycle defrosting operation is carried out under a condition that outside air temperature is low, liquid refrigerant of low temperature (minus temperature region) flows into the heat accumulating heat transfer pipe 113. Heat of water (standing water) stored in the heat accumulating water tank 130 is absorbed by refrigerant which flows through the heat accumulating heat transfer pipe 113, and temperature of the water is lowered, but convection of the stored water is not generated in the heat accumulating water tank 130, or even if the convection is generated, since this is extremely small flow caused by natural convection, the stored water easily freezes from surrounding of the heat accumulating heat transfer pipe 113, and reliability of the heat accumulating water tank 130 and the heat accumulating heat transfer pipe 113 is deteriorated.

When stored water freezes, heat transfer performance is extremely deteriorated, and two-phase refrigerant of a low dryness degree flows into the downstream side radiator 112. Therefore, when refrigerant and water exchange heat in the radiator 112, the refrigerant absorbs heat from water, temperature of water is lowered, water freezes in the radiator 112 in some cases, and the liquid refrigerant returns to the compressor 111 in some cases and there is a problem that reliability of the device is deteriorated.

When the hot water supplying and heating operation is carried out, after temperature of stored water in the heat accumulating water tank 130 rises to a value close to the refrigerant temperature, the heat accumulating heat transfer pipe 113 does not function as the heat exchanger. Therefore, the heat accumulating heat transfer pipe 113 does not contribute to enhancement of performance at the time of hot water supplying and heating operation.

The present invention has been accomplished to solve the conventional problem, and it is an object of the invention to provide a hot water generator having excellent energy saving performance while preventing water-side flow path of a radiator from being frozen at the time of a frost forming of an evaporator.

### [MEANS FOR SOLVING THE PROBLEM]

To solve the conventional problem, the present invention provides a hot water generator as defined in claim 1, which comprises: a refrigerant circuit formed by annularly connecting in the following order through refrigerant pipes, a compressor for compressing refrigerant, a flow path switching means for switching a flowing direction of the refrigerant, a plate-type first heat exchanger for exchanging heat between the refrigerant and liquid, a decompressing device for decompressing the refrigerant, and a second heat exchanger for exchanging heat between the refrigerant and air; a liquid path through which the liquid flows; and a control device, wherein the refrigeration circuit between the first heat exchanger and the decompressing device is provided with a third heat exchanger which exchanges heat between the refrigerant and the liquid, and the liquid path is configured such that the liquid flows through the third heat exchanger and the first heat exchanger in this order.

According to this, at the time of the reverse cycle defrosting operation, refrigerant radiates heat in the second heat exchanger (evaporator) and temperature of the refrigerant becomes low. The refrigerant first flows into the third heat exchanger (auxiliary heat exchanger). The refrigerant which flows into the auxiliary heat exchanger absorbs heat from liquid and evaporates, and a dryness degree of the refrigerant is increased. Temperature of the liquid is lowered by the radiation, but the liquid which flows into the auxiliary heat exchanger returns from a utilizing-side load (e.g., floor heating panel), and thus, temperature of the liquid is relatively high, and the liquid circulates through the liquid path. Therefore, the auxiliary heat exchanger is restrained from being frozen by local reduction of liquid temperature.

High dryness degree refrigerant or overheated refrigerant which flows out from the auxiliary heat exchanger flows into the plate-type first heat exchanger (radiator), and the refrigerant is heat-exchanged with hot water which flows out from the auxiliary heat exchanger. When the dryness degree of the refrigerant which flows into the radiator is high, liquid component evaporates and then becomes overheated refrigerant, and temperature thereof rises to a value close to liquid temperature. When refrigerant flows into the radiator in its overheated state, temperature of the refrigerant is changed only by sensible heat, and the temperature thereof rises to a value close to liquid temperature.

That is, temperature of most refrigerant which flows in the radiator at the time of the defrosting operation is in a sensible heat exchanging region which has a low heat passage rate, and average temperature of the refrigerant becomes sufficiently high due to temperature rise caused by the change in sensible heat change. Hence, heat flux of the refrigerant becomes small, and temperature reduction of liquid which flows in the radiator is suppressed and thus, freezing can be prevented. Further, a state of sucked refrigerant in the compressor during the defrosting operation can be brought into overheated state.

At the time of a heating operation, refrigerant condensed in the radiator flows into the auxiliary heat exchanger, and exchanges heat with liquid. Therefore, condensation ability is enhanced, and discharge pressure of the compressor is lowered. Hence, the energy saving performance of the device is enhanced also that the time of the heating operation.

### [EFFECT OF THE INVENTION]

According to the present invention, it is possible to provide a hot water generator having excellent energy saving performance while preventing a water-side flow path of a radiator from being frozen at the time of a frost forming of an evaporator.

### [BRIEF DESCRIPTION OF THE DRAWINGS]

Fig. 1 is a schematic block diagram of a hot water generator in a first embodiment of the present invention;
Fig. 2 is a schematic block diagram of an auxiliary heat exchanger (third heat exchanger) of the hot water generator;
Fig. 3 is a schematic diagram showing a flow line of water and a water dead region in a water-side flow path of a plate-type heat exchanger (first heat exchanger) of the hot water generator;
Fig. 4 is a Mollier diagram at time of a defrosting operation of the hot water generator;
Fig. 5 is a schematic diagram of a flow line of water in a hot water-side flow path of a double pipe heat exchanger (third heat exchanger) of the hot water generator;
Fig. 6 is a flowchart of defrosting operation control of the hot water generator;
Fig. 7 is a schematic block diagram of a hot water generator in a second embodiment of the present invention;
Fig. 8 is a flowchart of defrosting operation control of the hot water generator; and
Fig. 9 is a schematic block diagram of a conventional hot water generator.

### [MODE FOR CARRYING OUT THE INVENTION]

A first aspect of the present invention provides a hot water generator comprising: a refrigerant circuit formed by annularly connecting in the following order through refrigerant pipes, a compressor for compressing refrigerant, a flow path switching means for switching a flowing direction of the refrigerant, a plate-type first heat exchanger for exchanging heat between the refrigerant and liquid, a decompressing device for decompressing the refrigerant, and a second heat exchanger for exchanging heat between the refrigerant and air; a liquid path through which the liquid flows; and a control device, wherein the refrigeration circuit between the first heat exchanger and the decompressing device is provided with a third heat exchanger which exchanges heat between the refrigerant and the liquid, and the liquid path is configured such that the liquid flows through the third heat exchanger and the first heat exchanger in this order.

According to this, at the time of the reverse cycle defrosting operation, refrigerant radiates heat in the second heat exchanger (evaporator) and temperature of the refrigerant becomes low. The refrigerant first flows into the third heat exchanger (auxiliary heat exchanger). As the auxiliary heat exchanger, it is preferable to use a heat exchanger in which a local dead water region is less prone to be generated having a small flow speed distribution of a hot water-side flow path like a double pipe heat exchanger. The refrigerant which flows into the auxiliary heat exchanger absorbs heat from liquid (hot water) and evaporates, and a dryness degree of the refrigerant is increased. Temperature of hot water is lowered by radiation, but hot water which flows into the auxiliary heat exchanger returns from a utilizing-side load (e.g., floor heating panel) and thus, temperature of the hot water is relatively high, and the hot water always circulates through a liquid path (hot water pipe). Therefore, the auxiliary heat exchanger is restrained from being frozen by local reduction of water temperature.

High dryness degree refrigerant or overheated refrigerant which flows out from the auxiliary heat exchanger flows into a plate-type first heat exchanger (radiator), and exchanges heat with hot water which flows out from the auxiliary heat exchanger. When a dryness degree of the refrigerant which flows into the radiator is high, liquid component evaporates and then, becomes overheated refrigerant, and temperature thereof rises to a value close to hot water temperature. When refrigerant flows into the radiator in its overheated state, temperature of the refrigerant is changed only by sensible heat, and temperature thereof rises to a value close to hot water temperature.

That is, temperature of most refrigerant which flows in the radiator is in a sensible heat exchanging region which has a low heat passage rate, and average temperature of the refrigerant becomes sufficiently high due to temperature rise caused by the change in sensible heat. Hence, heat flux of the refrigerant becomes small, and temperature reduction of hot water which flows in the radiator is suppressed. A state of sucked refrigerant in the compressor during the defrosting operation is always an overheated state.

At the time of the heating operation, refrigerant condensed in the radiator flows into the auxiliary heat exchanger, and exchanges heat with hot water. Therefore, the condensation ability is enhanced, and discharge pressure of the compressor is lowered.

Therefore, during the reverse cycle defrosting operation, refrigerant flows through the auxiliary heat exchanger, a dryness degree of refrigerant which flows into the radiator rises, and temperature reduction of hot water which flows through the radiator is suppressed. Hence, even if a small plate-type heat exchanger having high heat exchange efficiency is used as the radiator, it is possible to prevent the radiator from being damaged by freezing of water in the radiator, liquid return into the compressor is suppressed, energy saving performance, compactness and reliability of the device are enhanced.

If the refrigerant passes through the auxiliary heat exchanger, discharge pressure of the compressor at the time of the heating operation is lowered. Therefore, energy saving performance is enhanced also at the time of the heating operation.

Moreover, the hot water generator further includes overheated degree detecting means for detecting an overheated degree of the refrigerant which flows through the refrigeration circuit between the first heat exchanger and the third heat exchanger, wherein the control device executes a defrosting operation which makes at least the refrigerant discharged from the compressor flow into the second heat exchanger through the flow path switching means, and the control device controls the compressor and the decompressing device such that the overheated degree of the refrigerant detected by the overheated degree detecting means becomes equal to a predetermined overheated degree during execution of the defrosting operation.

According to this, a circulation amount of refrigerant is adjusted such that an overheated degree of refrigerant flowing out from the auxiliary heat exchanger is secured at the time of the reverse cycle defrosting operation. Therefore, refrigerant which flows into the radiator always becomes gas refrigerant, heat flux in the radiator is largely reduced by the reduction in a heat passage rate caused by variation in sensible heat and by temperature rise of refrigerant.

Therefore, even when outside air temperature is low or hot water temperature is low, it is possible to reliably prevent hot water in the radiator and auxiliary heat exchanger from freezing.

According to a second aspect of the invention, in the first aspect, average flow speed of the liquid which passes through the third heat exchanger is faster than average flow speed of the liquid which passes through the first heat exchanger.

According to this, flow speed of hot water flowing in the auxiliary heat exchanger is increased at the time of the reverse cycle defrosting operation. Hence, turbulence effect is facilitated, and local reduction in water temperature is further suppressed.

Therefore, in addition to the effect of the first aspect, it is possible, with a simple design, to more reliably prevent water in the auxiliary heat exchanger from freezing at the time of the reverse cycle defrosting operation.

According to a third aspect of the invention, the third heat exchanger of the first or second aspect is a multi-pipe heat exchanger.

According to this, it is possible to easily design a hot water-side flow path of the auxiliary heat exchanger into such a structure that a flow line of hot water is close to substantially parallel to a thrust (axis) direction of a pipe which configures a heat exchanger. Hence, a flow speed distribution of a hot water flow path is small, and a local dead water region is less prone to be generated.

It is unnecessary to provide welding locations in a flow path unlike a plate-type heat exchanger except inlet and outlet portions of refrigerant and liquid. Therefore, a flow path space becomes simple in shape. Hence, even if a portion of the hot water-side flow path freezes and volume of the flow path expands, since a space where ice grows is wide, a pipe wall is not easily pressed.

Therefore, in addition to the effect of the first or second aspect, it is possible to easily and inexpensively realize proof stress design against freezing of the auxiliary heat exchanger.

According to a fourth aspect of the invention, in any one of the first to third aspects, the hot water generator further includes a temperature sensor for detecting temperature of the liquid which flows into the first heat exchanger or the third heat exchanger in the liquid path, wherein the control device adjusts a number of rotations of the compressor such that a circulation amount of the refrigerant which circulates through the refrigeration circuit is reduced when the temperature of the liquid detected by the temperature sensor is lower than predetermined temperature during execution of the defrosting operation.

According to this, when temperature of water which flows out from the auxiliary heat exchanger is lower than predetermined temperature having freezing possibility at the time of the reverse cycle defrosting operation, the circulation amount of refrigerant is reduced, a heat exchanging amount with hot water is reduced, and water temperature reduction is suppressed.

Therefore, in addition to the effect of the first to third aspects, even in a system having a small amount of retained water of the hot water circuit, it is possible to reliably prevent hot water in the radiator and the auxiliary heat exchanger from freezing.

According to a fifth aspect of the invention, in any one of the first to fourth aspects, the hot water generator further includes a pump in the liquid path, wherein the control device adjusts a number of rotations of the pump such that a flow rate of the liquid flowing through the liquid path is increased when temperature of the liquid detected by the temperature sensor during execution of the defrosting operation is lower than predetermined temperature.

According to this, when temperature of water which flows out from the auxiliary heat exchanger is lower than predetermined temperature having freezing possibility at the time of the reverse cycle defrosting operation, a flow rate of hot water is increased, and average temperature of hot water which flows through the radiator rises.

Therefore, in addition to the effect of the first to forth aspects, even in a system having large resistance of the hot water circuit or the utilizing-side terminal water circuit, it is possible to reliably prevent hot water in the radiator and the auxiliary heat exchanger from freezing.

According to a sixth aspect of the invention, in any one of the first to fifth aspects, the hot water generator further includes a bypass passage which branches off from the refrigeration circuit between the second heat exchanger and the third heat exchanger and is connected to the refrigeration circuit between the flow path switching means and a suction pipe of the compressor, or which is connected to a compression chamber of the compressor.

According to this, at the time of the reverse cycle defrosting operation, refrigerant radiates heat in the second heat exchanger (evaporator) and temperature of the refrigerant becomes low. The refrigerant is made to flow in a separated manner into the bypass passage and the third heat exchanger (auxiliary heat exchanger), and a flow rate of low temperature refrigerant which flows into the auxiliary heat exchanger is reduced. The auxiliary heat exchanger has a small flow speed distribution of the hot water-side flow path, and a local dead water region is less prone to be generated in the auxiliary heat exchanger like a double pipe heat exchanger. The refrigerant which flows into the auxiliary heat exchanger absorbs heat from liquid (hot water) and evaporates, and a dryness degree of the refrigerant is increased. Temperature of hot water is lowered by radiation on the other hand, hot water which flows into the auxiliary heat exchanger returns from a utilizing-side load (e.g., floor heating panel), and thus, temperature of the hot water is relatively high, and the hot water always circulates through the liquid path (hot water pipe) . Therefore, the auxiliary heat exchanger is restrained from being frozen by the local reduction of water temperature.

High dryness degree refrigerant or overheated refrigerant which flows out from the auxiliary heat exchanger flows into the plate-type first heat exchanger (radiator), and exchanges heat with hot water which flows out from the auxiliary heat exchanger. When a dryness degree of refrigerant which flows into the radiator is high, liquid component evaporates, and then the refrigerant becomes overheated refrigerant, and temperature thereof rises to a value close to hot water temperature. When refrigerant flows into its radiator in the overheated state, temperature of the refrigerant is changed only by sensible heat, and temperature thereof rises to a value close to the hot water temperature.

That is, a flow rate of refrigerant which from the bypass passage into the radiator is reduced, temperature of most refrigerant which flows in the radiator is in a sensible heat exchanging region which has a low heat passage rate, and average temperature of refrigerant becomes sufficiently high due to temperature rise caused by the change in sensible heat. Hence, heat flux of the refrigerant becomes small, and temperature reduction of hot water which flows in the radiator is suppressed.

Overheated refrigerant which flows out from the radiator merges with liquid-state or two-phase state refrigerant which flows out from the bypass passage, and the refrigerant is sucked by the compressor in a state where enthalpy thereof is lowered to a value close to saturated gas.

According to a seventh aspect of the invention, in the sixth aspect, the hot water generator further includes flow rate adjusting means for adjusting a flow rate of the refrigerant flowing through the bypass passage, wherein the control device controls the flow rate adjusting means such that an overheated degree of the refrigerant detected by the overheated degree detecting means during execution of the defrosting operation becomes equal to a predetermined overheated degree.

According to this, at the time of the reverse cycle defrosting operation, an overheated degree of refrigerant which flows out from the auxiliary heat exchanger is lower than a predetermined value, an opening degree of the flow rate adjusting means increases. Hence, flow path resistance of the bypass passage is reduced, and a refrigerant flow rate flowing into the auxiliary heat exchanger is reduced. Therefore, a dryness degree (overheated degree) of the refrigerant which flows into the radiator rises. On the other hand, when the overheated degree of the refrigerant is large, an opening degree of the flow rate adjusting means becomes small. Hence, flow path resistance of the bypass passage increases, the flow rate of refrigerant which flows into the auxiliary heat exchanger increases. Therefore, a bypass amount becomes excessively large, and it is possible to restrain large amount of liquid refrigerant from returning into the compressor.

Therefore, in addition to the effect of the sixth aspect, it is possible to widely adjust the bypass flow rate, a state of refrigerant which flows into the radiator can more precisely be adjusted, it is possible to prevent water from freezing of course, and to prevent liquid refrigerant in the compressor from being compressed.

According to a eighth aspect of the invention, in the seventh aspect, the control device controls the flow rate adjusting means such that a circulation amount of the refrigerant flowing through the first heat exchanger or the third heat exchanger is reduced when temperature of the liquid detected by the temperature sensor during execution of the defrosting operation is lower than predetermined temperature.

According to this, at the time of the reverse cycle defrosting operation, if temperature of water which flows out from the auxiliary heat exchanger is lower than a predetermined temperature having the freezing possibility, the opening degree of the flow rate adjusting means becomes large. Hence, resistance of the flow path of the bypass passage is reduced, a circulation amount of refrigerant of the auxiliary heat exchanger is reduced, a decompressing amount of the refrigeration cycle at the time of the defrosting operation is reduced, and temperature of refrigerant flowing through the radiator rises. Therefore, a heat exchanging amount with hot water in the radiator is reduced, and reduction of water temperature is suppressed.

Therefore, in addition to the effect of the seventh aspect, in a system having a small amount of retained water in the hot water circuit also, it is possible to reliably prevent hot water in the radiator and the auxiliary heat exchanger from freezing.

Embodiments of the present invention will be described with reference to the drawings. The invention is not limited to the embodiments.

### (First Embodiment)

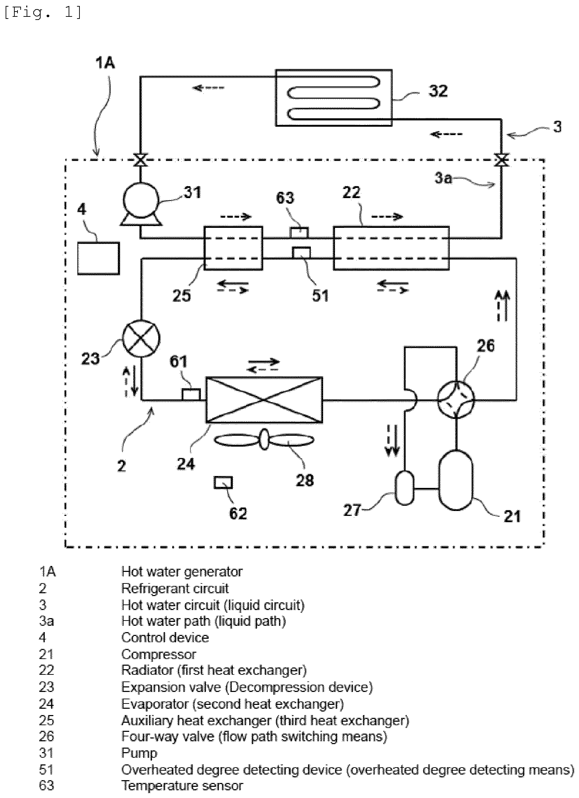

Fig. 1 is a schematic block diagram of a hot water generator in a first embodiment of the present invention. In Fig. 1, the hot water generator 1A includes a refrigerant circuit 2 through which refrigerant circulates, a hot water path (liquid path) 3a and a control device 4. As refrigerant, it is possible to use non-azeotropic mixed refrigerant such as R407C, pseudo azeotropic mixed refrigerant such as R410A, and single refrigerant. The hot water path 3a is connected, through a pipe, to a utilizing-side radiator 32 placed outside the hot water generator 1A, thereby forming a hot water circuit (liquid circuit) 3. The hot water generator 1A and the utilizing-side radiator 32 are combined with each other, thereby forming a circulation type hot water heating system.

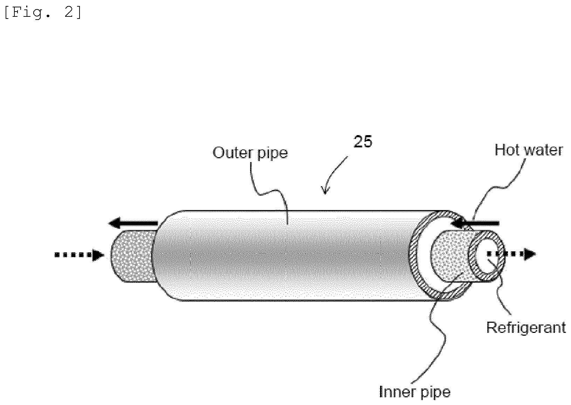

The refrigerant circuit 2 is configured by annularly connecting, to one another through refrigerant pipes, a compressor 21, a radiator (plate-type first heat exchanger) 22, an expansion valve (decompressor) 23 and an evaporator (second heat exchanger) 24. In this embodiment, an auxiliary heat exchanger (third heat exchanger) 25 is provided between the radiator 22 and the expansion valve 23. The auxiliary heat exchanger 25 is a double pipe type heat exchanger as shown in Fig. 2, and has such a configuration that refrigerant circulating in the refrigerant circuit 2 flows through an inner pipe flow path, and hot water flowing through the hot water circuit 3 flows through an outer pipe flow path. The refrigerant circuit 2 is provided with a four-way valve (flow path switching means) 26 for switching between a heating operation and a defrosting operation. In the heating operation, hot water is produced. An accumulator 27 for separating air and liquid from each other is provided between the evaporator 24 and the compressor 21.

In this embodiment, an outdoor fan 28 blows outside air into the evaporator 24, refrigerant flowing through the evaporator 24 absorbs heat from air, the radiator 22 and the auxiliary heat exchanger 25 produce hot water, and the produced hot water is utilized for heating a room or supplying hot water.

More specifically, the hot water circuit 3 includes the radiator 22, the auxiliary heat exchanger 25 and a pump 31. A hot water tank and the utilizing-side radiator 32 such as a fan convector are annularly connected to the hot water circuit 3 through pipes, hot water heated by the radiator 22 and the auxiliary heat exchanger 25 is sent out by the pump 31, the hot water circulates through the hot water circuit 3, the hot water radiates heat by the utilizing-side radiator 32, thereby accumulating heat or heating a room.

In Fig. 1, a flowing direction of refrigerant when a normal heating operation is carried out is shown by solid arrows . A state change of refrigerant in the heating operation will be described below.

High pressure refrigerant discharged from the compressor 21 flows into the radiator 22 through the four-way valve 26, and radiates heat to water which passes through the radiator 22. The high pressure refrigerant which flows out from the radiator 22 flows into the auxiliary heat exchanger 25, the refrigerant radiates heat to water which passes through the auxiliary heat exchanger 25. The high pressure refrigerant which flows out from the auxiliary heat exchanger 25 is decompressed by the expansion valve 23 and expanded and then, the refrigerant flows into the evaporator 24. The low pressure refrigerant which flows into the evaporator 24 absorbs heat from air here. The low pressure refrigerant which flows out from the evaporator 24 is again sucked into the compressor 21.

However, if the hot water producing operation is carried out in this manner, moisture in air is frozen by the evaporator 24, frost is formed, and heating ability and coefficient of performance are lowered due to deterioration of heat transfer performance of the evaporator 24. In this case, a frost formation degree is determined from outside air temperature, operating time or temperature of the evaporator, and it is necessary to carry out the defrosting operation for melting the frost by heat of refrigerant and for removing the frost.

Of the defrosting operations, a typical efficient operation having short defrosting time is a reverse cycle defrosting operation. In the reverse cycle defrosting operation, the four-way valve 26 is switched to reverse the circulation direction of refrigerant into a direction shown by broken arrows in Fig. 1, high temperature and high pressure gas refrigerant discharged from the compressor 21 is introduced into the evaporator 24, and frost is melted by the condensation heat.

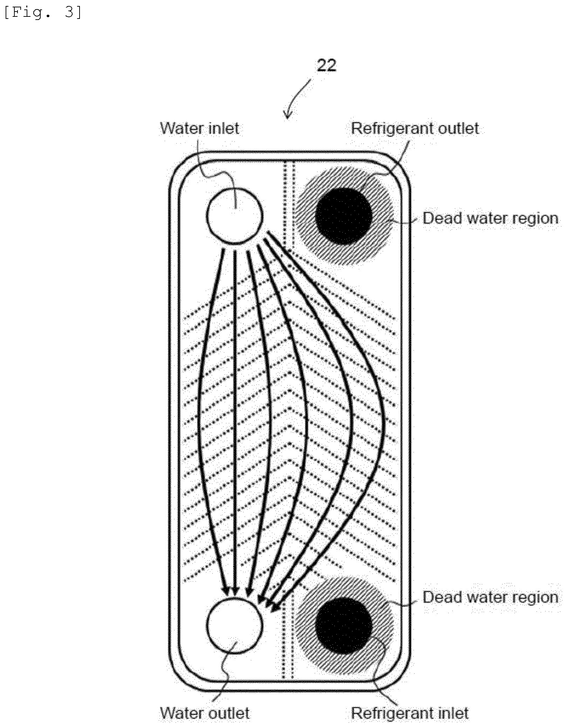

In the reverse cycle defrosting operation in a general refrigeration cycle, however, temperature of most refrigerant which flows into the radiator 22 is in a minus temperature region. Hence, if temperature of hot water which flows into the radiator 22 is lowered, there is a possibility that water freezes in the radiator 22. Especially when the radiator 22 is a plate-type heat exchanger, it is known that water in a dead water region where flow speed in a water-side flow path shown by inclined lines in Fig. 3 is prone to freeze. If water freezes in the water-side flow path of the plate-type heat exchanger having many welded locations and a complicated flow path shape, the plate is pressed by volume expansion and at the worst, the plate is damaged.

When such a small and high performance plate-type heat exchanger is used as the radiator 22, to prevent water from freezing, it is necessary to carry out a defrosting operation by a normal-order cycle (heating cycle) having longer defrosting time and poorer operation efficiency as compared with those of the reverse cycle defrosting operation, and it is necessary to limit an operable range such as a water temperature condition, and there are such peculiar demerits that energy saving performance and convenience are deteriorated.

Hence, although it will be described in detail in this embodiment, after the control device 4determines that the hot water generator 1A starts the defrosting operation, the control device 4 first switches the four-way valve 26 into the reverse cycle defrosting operation, and adjusts the number of rotations of the compressor 21 such that an overheated degree of refrigerant which flows out from the auxiliary heat exchanger 25 becomes equal to a predetermined value. Next, after temperature of hot water which flows out from the auxiliary heat exchanger 25 becomes lower than temperature having freezing possibility, the control device 4 executes the defrosting operation while reducing the number of rotations of the compressor 21 and the pump 31.

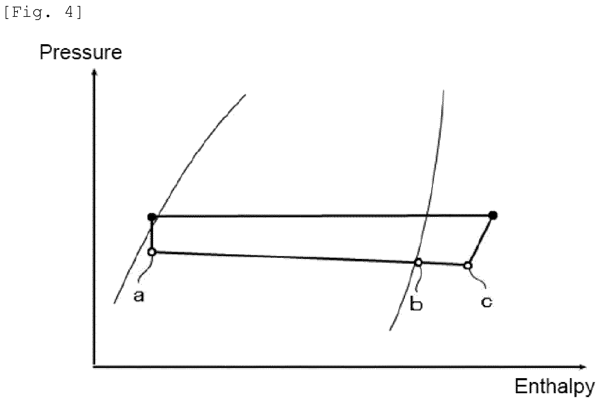

According to this, as shown by broken arrows in Fig. 1, high pressure refrigerant discharged from the compressor 21 flows into the evaporator 24 through the four-way valve 26 to radiate heat to accumulated frost to melt the frost. Liquid refrigerant which flows out from the evaporator 24 passes through the expansion valve 23 and flows into the auxiliary heat exchanger 25. Here, low temperature liquid refrigerant which flows through the auxiliary heat exchanger 25 absorbs heat from relatively high temperature hot water which circulates through the hot water circuit 3. Therefore, enthalpy of the refrigerant increases from point a to point b in Fig. 4, and the refrigerant flows out from the auxiliary heat exchanger 25 in a saturated gas state or a heated state.

Gas refrigerant which flows out from the auxiliary heat exchanger 25 flows into the radiator 22, absorbs heat from hot water, enthalpy of the refrigerant increases from point b to point c in Fig. 4, the refrigerant becomes overheated refrigerant having temperature close to hot water temperature, and the overheated refrigerant again returns to the compressor 21. Therefore, since temperature of refrigerant which flows in the radiator 22 is changed only by sensible heat, average temperature of the refrigerant is high, a heat passage rate becomes small, and water in the radiator is restrained from freezing.

When temperature of hot water which flows out from the auxiliary heat exchanger 25 is lowered in the hot water circuit 3, before temperature of the hot water is lowered to temperature having freezing possibility which is previously obtained by a result of experiment, a circulation amount of refrigerant is reduced, refrigerant temperature rises, a circulation amount of hot water increases, and temperature and flow speed of hot water rise. Hence, the auxiliary heat exchanger 25 is also restrained from freezing.

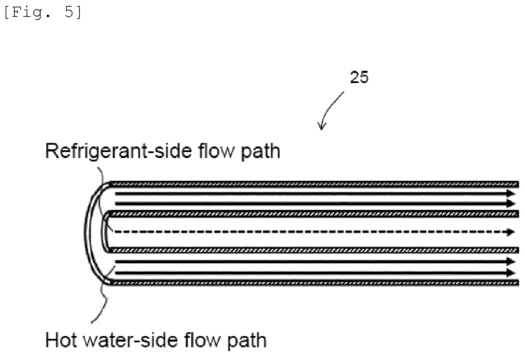

Further, since the auxiliary heat exchanger 25 is a double pipe type heat exchanger, bias of a flow speed distribution of the hot water-side flow path is small as shown in Fig. 5, that is, average flow speed of liquid becomes fast as compared with a plate-type first heat exchanger. Therefore, a local dead water region is less prone to be generated, and freezing is suppressed.

An operation of operation control will be described below. The refrigerant circuit 2 includes an evaporation temperature sensor 61 which detects temperature (evaporation temperature) Tei of refrigerant which flows into the evaporator 24 at a time of a normal heating operation, and an overheated degree detecting device 51 which detects an overheated degree (outlet overheated degree) SH of refrigerant which flows out from the auxiliary heat exchanger 25 at the time of the defrosting operation. More specifically, the overheated degree detecting device 51 detects pressure and temperature of refrigerant, and calculates an overheated degree from a difference between the detected pressure and saturation temperature which is estimated from the detected pressure. Here, the saturation temperature of refrigerant is calculated from an equation of physical property of refrigerant. The hot water generator 1A is provided with an outside air temperature sensor 62 which detects outdoor air temperature (outside air temperature) Tao. The hot water circuit 3 is provided with a temperature sensor 63 which detects temperature (outgoing-water temperature) Two of hot water which flows out from the auxiliary heat exchanger 25.

In this embodiment, the control device 4 controls the number or rotations of the compressor 21, the outdoor fan 28 and the pump 31, the switching operation of the four-way valve 26 and the opening degree of the expansion valve 23 based on detected values detected by the various kinds of sensors 51, 61, 62 and 63.

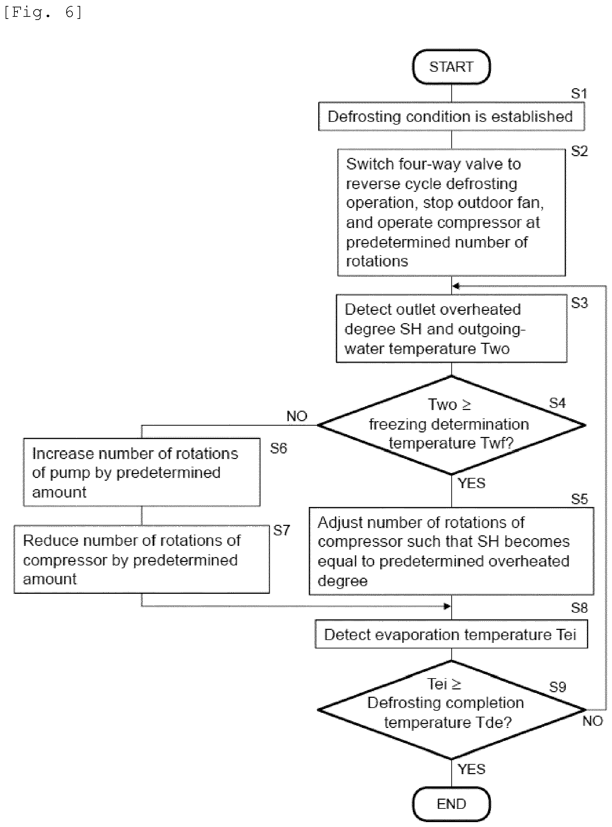

Next, control of the control device 4 at the time of the defrosting operation will be described in detail with reference to a flowchart shown in Fig. 6.

First, the control device 4 monitors, at the time of the normal heating operation, whether a defrosting condition is established based on the evaporation temperature Tei detected by the evaporation temperature sensor 61, outside air temperature Tao detected by the outside air temperature sensor 62, and heating operation time as measured from the completion of the last defrosting operation. If the defrosting condition is established (step S1), the defrosting operation is started.

In the defrosting operation, the control device 4 switches the four-way valve 26 into the reverse cycle defrosting operation, stops the outdoor fan 28, and operates the compressor 21 at the predetermined number of rotations (step S2). Thereafter, the overheated degree detecting device 51 detects outlet overheated degree SH, and the temperature sensor 63 detects outgoing-water temperature Two (step S3).

Next, the control device 4 compares outgoing-water temperature Two detected by the temperature sensor 63 and preset freezing determination temperature Twf of water are with each other during the defrosting operation, and it is determined whether hot water freezes (step S4). If the outgoing-water temperature Two is not lower than the freezing determination temperature Twf (YES in step S4), it is determined that hot water does not freeze, and the number of rotations of the compressor 21 is adjusted such that the outlet overheated degree SH becomes equal to a predetermined overheated degree (step S5).

On the other hand, if the outgoing-water temperature Two is lower than the freezing determination temperature Twf (NO in step S4), it is determined that there is a possibility that hot water freezes, the number of rotations of the pump 31 is increased by a predetermined amount (step S6), and the number of rotations of the compressor 21 is reduced by a predetermined amount (step S7).

The freezing determination temperature Twf of water is previously obtained experimentally, and temperature at which water does not freeze may be set. If this temperature is set as a function of outside air temperature like Twf = f(Tao), it is possible to take influence of temperature refrigerant which flows into the radiator 22 into consideration, and precision of the freezing prevention is further enhanced.

Thereafter, the evaporation temperature Tei is detected by the evaporation temperature sensor 61 (step S8), the control device 4 compares, with each other, the evaporation temperature Tei and defrosting completion temperature Tde which is preset based on the outside air temperature Tao, and determines whether the defrosting completion condition is established (step S9) . If the evaporation temperature Tei is lower than the defrosting completion temperature Tde (NO in step S9), it is determined that frost is remaining, the procedure is returned to step S3, and the defrosting operation is continued. On the other hand, if the evaporation temperature Tei is not lower than the defrosting completion temperature Tde (YES in step S9), it is determined that frost is completely melted, and the defrosting operation is completed. Then, the normal heating operation is again started.

As described above, in this embodiment, after the control device 4 determines that the defrosting operationis started, the control device 4 executes the reverse cycle defrosting operation, and adjusts the number of rotations of the compressor 21 such that the overheated degree SH of refrigerant which flows out from the auxiliary heat exchanger 25 becomes equal to the predetermined overheated degree. Further, when the temperature of water which flows out from the auxiliary heat exchanger 25 is lower than the temperature having the freezing possibility, the control device 4 controls such that the number of rotations of the compressor 21 is reduced, the circulation amount of refrigerant is reduced, the number of rotations of the pump 31 is increased, and the flow rate of hot water is increased.

According to this, it is possible to restrain the radiator 22 during the defrosting operation and water flowing through the auxiliary heat exchanger 25 from freezing, and reliability of the device is enhanced.

Although the pump 31 adjusts the circulation amount of hot water in this embodiment, the hot water circuit 3 may be provided with a flow rate adjusting valve, and the circulation amount of hot water may be adjusted.

### (Second Embodiment)

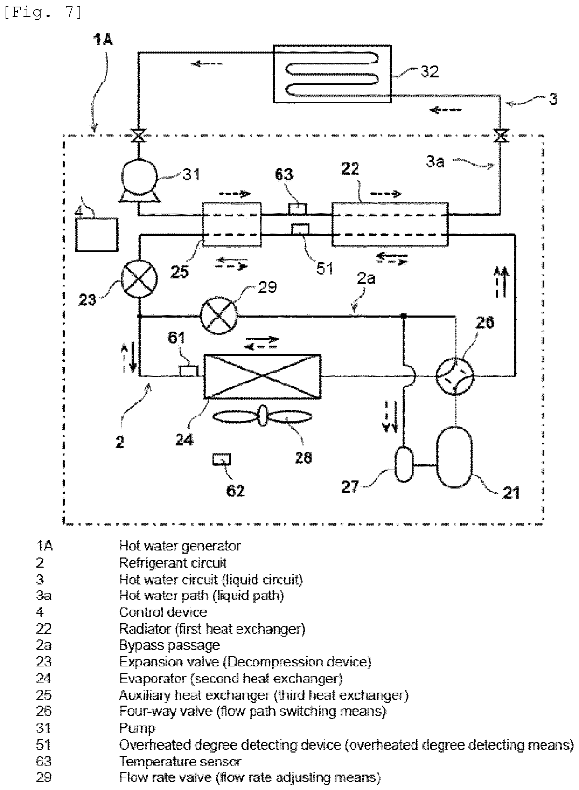

Fig. 7 is a schematic block diagram of a hot water generator in a second embodiment of the present invention. In Fig. 7, the same symbols are allocated to the same function members as those of the first embodiment, and explanation thereof will partially be omitted.

The hot water generator 1A of the second embodiment further includes a bypass passage 2a in addition to the first embodiment.

The bypass passage 2a branches off from the refrigerant circuit 2 between the expansion valve 23 and the evaporator 24, and reaches the refrigerant circuit 2 between the four-way valve 26 and the accumulator 27 between the evaporator 24 and the compressor 21 of a suction pipe. The bypass passage 2a includes a flow rate valve (flow rate adjusting means) 29.

In the second embodiment, although it will be described in detail later, after the control device 4 determines that the hot water generator 1A starts the defrosting operation, the control device 4 switches the four-way valve 26 into the reverse cycle defrosting operation, and adjusts the opening degree of the expansion valve 23 and the opening degree of the flow rate valve 29 such that an overheated degree of refrigerant which flows out from the auxiliary heat exchanger 25 becomes equal to a predetermined value. Next, after temperature of hot water which flows out from the auxiliary heat exchanger 25 becomes lower than temperature having the freezing possibility, the control device 4 executes the defrosting operation while increasing the opening degree of the flow rate valve 29.

According to this, high pressure refrigerant discharged from the compressor 21 flows into the evaporator 24 through the four-way valve 26, and radiates heat to accumulated frost and melts the frost as shown by broken arrows in Fig. 7. A portion of liquid refrigerant which flows out from the evaporator 24 flows into the bypass passage 2a, the liquid refrigerant is slightly decompressed by the flow rate valve 29, and the liquid refrigerant flows out to an upstream portion of the accumulator 27 in a refrigerant state shown by the point a in Fig. 4. Refrigerant of main flow (refrigerant flowing into auxiliary heat exchanger 25) flows into the auxiliary heat exchanger 25 through the expansion valve 23, and low temperature liquid refrigerant flowing through the auxiliary heat exchanger 25 absorbs heat from relatively high temperature hot water which circulates through the hot water circuit 3, and enthalpy of the refrigerant increases from the point a to the point b in Fig. 4. Here, a flow rate of refrigerant flowing through the auxiliary heat exchanger 25 is adjusted by opening degrees of the expansion valve 23 and the flow rate valve 29 such that a state of refrigerant flowing out from the auxiliary heat exchanger 25 becomes a saturated gas state of a heated state.

Gas refrigerant which flows out from the auxiliary heat exchanger 25 flows into the radiator 22, absorbs heat from hot water and thus, enthalpy thereof increases from the point b to the point c in Fig. 4, the refrigerant becomes overheated refrigerant having temperature close to hot water temperature, and the refrigerant flows out from the radiator 22. The overheated refrigerant which flows out from the radiator 22 merges with two-phase refrigerant which flows out from the bypass passage 2a upstream of the accumulator 27, the overheated refrigerant becomes refrigerant close the saturated gas state as shown by the point b in Fig. 4, and again returns to the compressor 21.

Therefore, a flow rate of refrigerant which flows into the radiator 22 is reduced by the bypass passage 2a, and temperature of refrigerant which flows in the radiator 22 is changed only by sensible heat and therefore, average temperature of the refrigerant is high, a heat passage rate becomes small, and water in the radiator is restrained from freezing.

In the hot water circuit 3, if temperature of hot water which flows out from the auxiliary heat exchanger 25 is lowered, before the temperature is lowered to a value having a freezing possibility which is previously obtained by a result of experiment, an opening degree of the flow rate valve 29 is increased, resistance of a flow path of the bypass passage 2a is reduced, a flow rate of refrigerant which flows into the auxiliary heat exchanger 25 is reduced, a decompression amount of a refrigeration cycle at the time of the defrosting operation is reduced, and temperature of refrigerant which flows through the radiator 22 rises. Hence, a heat exchanging amount with hot water in the radiator is reduced, and water is restrain from freezing.

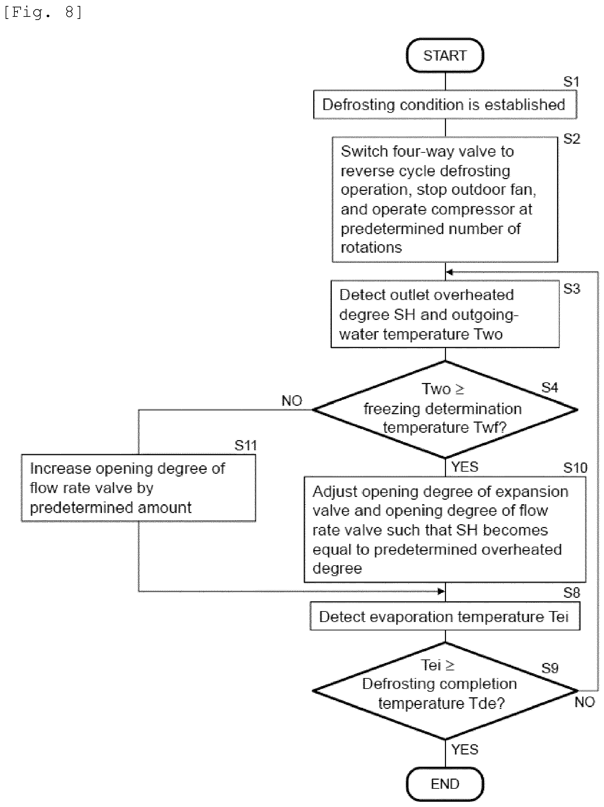

Next, control of a control device 5 at the time of the defrosting operation will be described in detail with reference to a flowchart shown in Fig. 8. The same step numbers are allocated to the same processing flows as those of the first embodiment, and explanation thereof will be omitted.

In step S4, when the outgoing-water temperature Two is not lower than the freezing determination temperature Twf (YES in step S4), it is determined that hot water does not freeze, and the opening degrees of the expansion valve 23 and the flow rate valve 29 are adjusted such that the outlet overheated degree SH becomes equal to a predetermined overheated degree (step S10).

On the other hand, if the outgoing-water temperature Two is lower than the freezing determination temperature Twf in step S4 (NO in step S4), it is determined that there is a possibility that hot water freezes, and the opening degree of the flow rate valve 29 is increased by a predetermined amount (step S11).

As described above, in the second embodiment, after the control device 4 determines that the defrosting operation is started, the control device 4 executes the reverse cycle defrosting operation, and the opening degrees of the expansion valve 23 and the flow rate valve 29 are adjusted such that the overheated degree SH of refrigerant which flows out from the auxiliary heat exchanger 25 becomes equal to the predetermined overheated degree. Further, when temperature of water which flows out from the auxiliary heat exchanger 25 is lower than temperature having the freezing possibility, the control device 4 controls such that the opening degree of the flow rate valve 29 is increased, and a circulation amount of refrigerant of the main flow (refrigerant which flows into auxiliary heat exchanger 25) is reduced.

According to this, it is possible to restrain water which flows through the radiator 22 and the auxiliary heat exchanger 25 during the defrosting operation from freezing, liquid is restrained from returning to the compressor, and reliability of the device is enhanced.

Although the bypass flow rate is adjusted by the flow rate valve 29 in the second embodiment, the bypass passage 2a may be provided with a two-way valve, and the bypass flow rate may be adjusted by opening and closing the two-way valve.

The outgoing-water temperature Two is detected by the temperature sensor 63, and it is determined whether water will freeze in the first and second embodiments, but it is possible to determine whether water will freeze using temperature of water at the inlet of the auxiliary heat exchanger 25, or by detecting temperature of a body of the auxiliary heat exchanger 25 or a body of the radiator 22. Determination may be made based on a difference between temperature of water which flows into the auxiliary heat exchanger 25 and the outgoing-water temperature Two. In this case, a temperature sensor is provided in the auxiliary heat exchanger 25 or an inlet of the auxiliary heat exchanger 25 in the hot water circuit 3, and the temperature difference and a threshold value which becomes a determination reference may be compared with each other. The threshold value may be set to a value which is previously obtained by experiment.

In the first and second embodiments, refrigerant flows through the inner pipe flow path and hot water flows through the outer pipe flow path of the auxiliary heat exchanger 25, but the flow paths may be reversed. It is not absolutely necessary that the auxiliary heat exchanger 25 is the double pipe heat exchanger, the auxiliary heat exchanger 25 may be of a three-pipe structure, and the refrigerant pipe and the hot water pipe may be in contact with each other by means of welding.

Although the overheated degree detecting device 51 detects pressure and temperature of refrigerant, and calculates the overheated degree SH in the first and second embodiments, a difference between refrigerant-side outlet temperature and a refrigerant-side inlet temperature of the auxiliary heat exchanger 25 may be calculated as the overheated degree SH.

It is not absolutely necessary that decompressing means 23 in the first and second embodiments is the expansion valve, and the decompressing means 23 may be a capillary tube, or may be an expansion device which collects power from expanding refrigerant. In this case, the number of rotations of the expansion device may be controlled by changing a load by an electricity generator connected to the expansion device for example.

### [INDUSTRIAL APPLICABILITY]

The present invention is especially effective for a hot water generator which produces hot water by a refrigeration cycle device, and utilizes the hot water for heating a room or supplying hot water.

### [EXPLANATION OF SYMBOLS]

1A hot water generator
2 refrigerant circuit
2a bypass passage
3 hot water circuit (liquid circuit)
3a hot water path (liquid path)
4 control device
21 compressor
22 radiator (first heat exchanger)
23 expansion valve (decompressing device)
24 evaporator (second heat exchanger)
25 auxiliary heat exchanger (third heat exchanger)
26 four-way valve (flow path switching means)
29 flow rate valve (flow rate adjusting means)
31 pump
51 overheated degree detecting device (overheated degree detecting means)
63 temperature sensor

## Claims

1. A hot water generator (1A) comprising: a refrigerant circuit (2) formed by annularly connecting in the following order through refrigerant pipes, a compressor (21) for compressing refrigerant, a flow path switching means (26) for switching a flowing direction of the refrigerant, a plate-type first heat exchanger (22) for exchanging heat between the refrigerant and liquid, a decompressing device (23) for decompressing the refrigerant, and a second heat exchanger (24) for exchanging heat between the refrigerant and air;
a liquid path (3a) through which the liquid flows; and
a control device (4), wherein
the refrigeration circuit between the first heat exchanger (22) and the decompressing device (23) is provided with a third heat exchanger (25) which exchanges heat between the refrigerant and the liquid, and
the liquid path (3a) is configured such that the liquid flows through the third heat exchanger (25) and the first heat exchanger (22) in this order,
**characterized in that** the hot water generator (1A) further provides an overheated degree detecting means (51) for detecting an overheated degree of the refrigerant which flows through the refrigeration circuit (2) between the first heat exchanger (22) and the third heat exchanger (25),
the control device (4) is configured to execute a defrosting operation which makes the refrigerant discharged from the compressor (21) flow into the second heat exchanger (24) through the flow path switching means (26), and
the control device (4) is configured to control the compressor (21) and the decompressing device (23) such that the overheated degree of the refrigerant detected by the overheated degree detecting means (51) becomes equal to a predetermined overheated degree during execution of the defrosting operation.

2. The hot water generator (1A) according to claim 1, wherein average flow speed of the liquid which passes through the third heat exchanger (25) is faster than average flow speed of the liquid which passes through the first heat exchanger (22).

3. The hot water generator (1A) according to claim 1 or 2, wherein the third heat exchanger (25) is a multi-pipe heat exchanger.

4. The hot water generator (1A) according to any one of claims 1 to 3, further comprising a temperature sensor (63) for detecting temperature of the liquid which flows into the first heat exchanger (22) or the third heat exchanger (25) in the liquid path (3a), wherein
the control device (4) is configured to adjust a number of rotations of the compressor (21) such that a circulation amount of the refrigerant which circulates through the refrigeration circuit (2) is reduced when the temperature of the liquid detected by the temperature sensor (63) is lower than predetermined temperature during execution of the defrosting operation.

5. The hot water generator (1A) according to any one of claims 1 to 4, further comprising a pump (31) in the liquid path (3a), wherein
the control device (4) is configured to adjust a number of rotations of the pump (31) such that a flow rate of the liquid flowing through the liquid path (3a) is increased when temperature of the liquid detected by the temperature sensor (63) during execution of the defrosting operation is lower than predetermined temperature.

6. The hot water generator (1A) according to any one of claims 1 to 5, further comprising a bypass passage (2a) which branches off from the refrigeration circuit (2) between the second heat exchanger (24) and the third heat exchanger (25) and is connected to the refrigeration circuit (2) between the flow path switching means (26) and a suction pipe of the compressor (21), or which is connected to a compression chamber of the compressor (21).

7. The hot water generator (1A) according to claim 6, further comprising flow rate adjusting means (29) for adjusting a flow rate of the refrigerant flowing through the bypass passage (2a), wherein
the control device (4) is configured to control the flow rate adjusting means (29) such that an overheated degree of the refrigerant detected by the overheated degree detecting means (51) during execution of the defrosting operation becomes equal to a predetermined overheated degree.

8. The hot water generator (1A) according to claim 7, wherein the control device (4) is configured to control the flow rate adjusting means (29) such that a circulation amount of the refrigerant flowing through the first heat exchanger (22) or the third heat exchanger (25) is reduced when temperature of the liquid detected by the temperature sensor (63) during execution of the defrosting operation is lower than predetermined temperature.

## Patentansprüche

1. Heißwassererzeuger (1A), umfassend: einen Kältemittelkreislauf (2), der durch ringförmiges Verbinden in der nachstehenden Reihenfolge mithilfe von Kältemittelleitungen eines Kompressors (21) zum Verdichten des Kältemittels, eines Strömungsweg-Umschaltmittels (26) zum Wechseln einer Strömungsrichtung des Kältemittels, eines ersten Plattenwärmetauschers (22) für den Wärmetausch zwischen dem Kältemittel und einer Flüssigkeit, einer Dekompressionsvorrichtung (23) zum Dekomprimieren des Kältemittels und eines zweiten Wärmetauschers (24) für den Wärmetausch zwischen dem Kältemittel und Luft gebildet ist;
einen Flüssigkeitsweg (3a), durch den die Flüssigkeit strömt; und
eine Steuervorrichtung (4), wobei
der Kühlkreislauf zwischen dem ersten Wärmetauscher (22) und der Dekompressionsvorrichtung (23) mit einem dritten Wärmetauscher (25) versehen ist, der Wärme zwischen dem Kältemittel und der Flüssigkeit austauscht, und
der Flüssigkeitsweg (3a) derart gestaltet ist, dass die Flüssigkeit durch den dritten Wärmetauscher (25) und den ersten Wärmetauscher (22) in dieser Reihenfolge strömt,
**dadurch gekennzeichnet, dass** der Heißwassererzeuger (1A) ferner ein Überhitzungsgrad-Detektionsmittel (51) zum Detektieren eines Überhitzungsgrads des Kältemittels bereitstellt, das zwischen dem ersten Wärmetauscher (22) und dem dritten Wärmetauscher (25) durch den Kühlkreislauf (2) strömt,
die Steuervorrichtung (4) gestaltet ist, um einen Enteisungsvorgang auszuführen, der das aus dem Kompressor (21) ausgelassene Kältemittel mithilfe der Strömungsweg-Umschaltmittel (26) in den zweiten Wärmetauscher (24) strömen lässt, und
die Steuervorrichtung (4) gestaltet ist, um den Kompressor (21) und die Dekompressionsvorrichtung (23) derart zu steuern, dass der Überhitzungsgrad des Kältemittels, der von dem Überhitzungsgrad-Detektionsmittel (51) detektiert wird, während der Ausführung des Enteisungsvorgangs gleich einem vorbestimmten Überhitzungsgrad wird.

2. Heißwassererzeuger (1A) nach Anspruch 1, wobei eine durchschnittliche Strömungsgeschwindigkeit der Flüssigkeit, die den dritten Wärmetauscher (25) durchströmt, höher als die durchschnittliche Strömungsgeschwindigkeit der Flüssigkeit ist, die den ersten Wärmetauscher (22) durchströmt.

3. Heißwassererzeuger (1A) nach Anspruch 1 oder 2, wobei der dritte Wärmetauscher (25) ein Mehrrohrwärmetauscher ist.

4. Heißwassererzeuger (1A) nach einem der Ansprüche 1 bis 3, der ferner einen Temperatursensor (63) zum Detektieren der Temperatur der Flüssigkeit umfasst, die in den ersten Wärmetauscher (22) oder den dritten Wärmetauscher (25) im Flüssigkeitsweg (3a) strömt, wobei
die Steuervorrichtung (4) gestaltet ist, um eine Anzahl von Umdrehungen des Kompressors (21) derart zu regulieren, dass eine Umlaufmenge des Kältemittels, das durch den Kühlkreislauf (2) umläuft, verringert wird, wenn die von dem Temperatursensor (63) detektierte Temperatur der Flüssigkeit während der Ausführung des Enteisungsvorgangs niedriger als eine vorbestimmte Temperatur ist.

5. Heißwassererzeuger (1A) nach einem der Ansprüche 1 bis 4, der ferner eine Pumpe (31) im Flüssigkeitsweg (3a) umfasst, wobei
die Steuervorrichtung (4) gestaltet ist, um eine Anzahl von Umdrehungen der Pumpe (31) derart zu regulieren, dass eine Durchflussmenge der durch den Flüssigkeitsweg (3a) strömenden Flüssigkeit erhöht wird, wenn die von dem Temperatursensor (63) detektierte Temperatur der Flüssigkeit während der Ausführung des Enteisungsvorgangs niedriger als die vorbestimmte Temperatur ist.

6. Heißwassererzeuger (1A) nach einem der Ansprüche 1 bis 5, der ferner einen Umgehungsdurchgang (2a) umfasst, der zwischen dem zweiten Wärmetauscher (24) und dem dritten Wärmetauscher (25) vom Kühlkreislauf (2) abzweigt und zwischen dem Strömungsweg-Umschaltmittel (26) und einer Saugleitung des Kompressors (21) mit dem Kühlkreislauf (2) verbunden ist oder der mit einem Verdichtungsraum des Kompressors (21) verbunden ist.

7. Heißwassererzeuger (1A) nach Anspruch 6, der ferner ein Durchflussmengen-Anpassungsmittel (29) zum Anpassen einer Durchflussmenge des durch den Umgehungsdurchgang (2a) strömenden Kältemittels umfasst, wobei
die Steuervorrichtung (4) gestaltet ist, um das Durchflussmengen-Anpassungsmittel (29) derart zu steuern, dass ein Überhitzungsgrad des Kältemittels, der von dem Überhitzungsgrad-Detektionsmittel (51) während der Ausführung des Enteisungsvorgangs detektiert wird, gleich einem vorbestimmten Überhitzungsgrad wird.

8. Heißwassererzeuger (1A) nach Anspruch 7, wobei die Steuervorrichtung (4) gestaltet ist, um das Durchflussmengen-Anpassungsmittel (29) derart zu steuern, dass eine Umlaufmenge des durch den ersten Wärmetauscher (22) oder den dritten Wärmetauscher (25) strömenden Kältemittels verringert wird, wenn die von dem Temperatursensor (63) detektierte Temperatur während der Ausführung des Enteisungsvorgangs niedriger als die vorbestimmte Temperatur ist.

## Revendications

1. Générateur d'eau chaude (1A) comprenant : un circuit de réfrigérant (2) formé en reliant de façon annulaire, dans l'ordre suivant, par le biais de tuyaux de réfrigérant, un compresseur (21) destiné à comprimer un réfrigérant, un moyen de commutation de trajet d'écoulement (26) destiné à commuter une direction d'écoulement du réfrigérant, un premier échangeur de chaleur (22) de type plaque destiné à échanger la chaleur entre le réfrigérant et un liquide, un dispositif de décompression (23) destiné à décomprimer le réfrigérant, et un deuxième échangeur de chaleur (24) destiné à échanger la chaleur entre le réfrigérant et l'air ;
un trajet de liquide (3a) à travers lequel s'écoule le liquide ; et
un dispositif de commande (4), dans lequel
le circuit de réfrigération entre le premier échangeur de chaleur (22) et le dispositif de décompression (23) est pourvu d'un troisième échangeur de chaleur (25) qui échange la chaleur entre le réfrigérant et le liquide, et
le trajet de liquide (3a) est configuré de telle sorte que le liquide s'écoule à travers le troisième échangeur de chaleur (25) et le premier échangeur de chaleur (22) dans cet ordre,
**caractérisé en ce que** le générateur d'eau chaude (1A) fournit en outre un moyen de détection de degré de surchauffe (51) destiné à détecter un degré de surchauffe du réfrigérant qui s'écoule à travers le circuit de réfrigération (2) entre le premier échangeur de chaleur (22) et le troisième échangeur de chaleur (25),
le dispositif de commande (4) est configuré pour exécuter une opération de dégivrage qui amène le réfrigérant déchargé du compresseur (21) à s'écouler dans le deuxième échangeur de chaleur (24) par le biais du moyen de commutation de trajet d'écoulement (26), et
le dispositif de commande (4) est configuré pour commander le compresseur (21) et le dispositif de décompression (23) de telle sorte que le degré de surchauffe du réfrigérant détecté par le moyen de détection de degré de surchauffe (51) devient égal à un degré de surchauffe prédéterminé pendant l'exécution de l'opération de dégivrage.

2. Générateur d'eau chaude (1A) selon la revendication 1, dans lequel la vitesse moyenne d'écoulement du liquide qui passe à travers le troisième échangeur de chaleur (25) est plus élevée que la vitesse moyenne d'écoulement du liquide qui passe à travers le premier échangeur de chaleur (22).

3. Générateur d'eau chaude (1A) selon la revendication 1 ou 2, dans lequel le troisième échangeur de chaleur (25) est un échangeur de chaleur multitubulaire.

4. Générateur d'eau chaude (1A) selon l'une quelconque des revendications 1 à 3, comprenant en outre un capteur de température (63) destiné à détecter la température du liquide qui s'écoule dans le premier échangeur de chaleur (22) ou le troisième échangeur de chaleur (25) dans le trajet de liquide (3a), dans lequel
le dispositif de commande (4) est configuré pour ajuster un nombre de rotations du compresseur (21) de telle sorte qu'une quantité de circulation du réfrigérant qui circule à travers le circuit de réfrigération (2) est réduite lorsque la température du liquide détectée par le capteur de température (63) est inférieure à une température prédéterminée pendant l'exécution de l'opération de dégivrage.

5. Générateur d'eau chaude (1A) selon l'une quelconque des revendications 1 à 4, comprenant en outre une pompe (31) dans le trajet de liquide (3a), dans lequel
le dispositif de commande (4) est configuré pour ajuster un nombre de rotations de la pompe (31) de telle sorte qu'un débit du liquide s'écoulant à travers le trajet de liquide (3a) est augmenté lorsque la température du liquide détectée par le capteur de température (63) pendant l'exécution de l'opération de dégivrage est inférieure à une température prédéterminée.

6. Générateur d'eau chaude (1A) selon l'une quelconque des revendications 1 à 5, comprenant en outre un passage de contournement (2a) qui bifurque du circuit de réfrigération (2) entre le deuxième échangeur de chaleur (24) et le troisième échangeur de chaleur (25) et est relié au circuit de réfrigération (2) entre le moyen de commutation de trajet d'écoulement (26) et un tuyau d'aspiration du compresseur (21), ou qui est relié à une chambre de compression du compresseur (21).

7. Générateur d'eau chaude (1A) selon la revendication 6, comprenant en outre un moyen d'ajustement de débit (29) destiné à ajuster un débit du réfrigérant s'écoulant à travers le passage de contournement (2a), dans lequel
le dispositif de commande (4) est configuré pour commander le moyen d'ajustement de débit (29) de telle sorte qu'un degré de surchauffe du réfrigérant détecté par le moyen de détection de degré de surchauffe (51) pendant l'exécution de l'opération de dégivrage devient égal à un degré de surchauffe prédéterminé.

8. Générateur d'eau chaude (1A) selon la revendication 7, dans lequel le dispositif de commande (4) est configuré pour commander le moyen d'ajustement de débit (29) de telle sorte qu'une quantité de circulation du réfrigérant s'écoulant à travers le premier échangeur de chaleur (22) ou le troisième échangeur de chaleur (25) est réduite lorsque la température du liquide détectée par le capteur de température (63) pendant l'exécution de l'opération de dégivrage est inférieure à une température prédéterminée.
